(19)

Europäisches
Patentamt
European
Patent Office
Office européen
des brevets

(11)  **EP 2 223 764 B1**

(12)  **EUROPEAN PATENT SPECIFICATION**

(45) Date of publication and mention
of the grant of the patent:
**10.04.2019  Bulletin 2019/15**

(51) Int Cl.:
***B23H 7/04*** (2006.01)

(21) Application number: **09176300.3**

(22) Date of filing: **18.11.2009**

(54) **Wire electric discharge machine**

Drahtfunkenerosionsmaschine

Machine à décharge électrique à fil

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **27.02.2009  JP 2009045409**

(43) Date of publication of application:
**01.09.2010  Bulletin 2010/35**

(73) Proprietor: **FANUC CORPORATION
Oshino-mura
Minamitsuru-gun
Yamanashi 401-0597 (JP)**

(72) Inventors:
• **Murai, Masao
Yamanashi 401-0597 (JP)**
• **Kawahara, Akiyoshi
Yamanashi 401-0597 (JP)**
• **Nakashima, Yasuo
Yamanashi 401-0597 (JP)**
• **Furuta, Tomoyuki
Yamanashi 401-0597 (JP)**

(74) Representative: **Thum, Bernhard
Wuesthoff & Wuesthoff
Patentanwälte PartG mbB
Schweigerstraße 2
81541 München (DE)**

(56) References cited:
**EP-A- 0 698 440     EP-A1- 1 806 197
US-A- 5 416 290      US-A- 5 585 014**

EP 2 223 764 B1

**Description**

BACKGROUND OF THE INVENTION

1. Field of the Invention

The present invention relates to a wire electric discharge machine that applies a positive polarity voltage and a negative polarity voltage between a wire electrode and a workpiece. Such a machine is known from EP0698440A1.

2. Description of the Related Art

In electric discharge machining, a voltage is applied across a machining gap between a workpiece and a machining electrode in dielectric fluid to generate arc discharge. The workpiece is melted by the heat of this discharge, vaporization explosion is caused by the dielectric fluid heated rapidly, and the molten workpiece is blown by the explosion. Electric discharge machining proceeds by repeating this process at a high frequency. The machining surface is formed by small discharge craters generated during the discharge, so the surface roughness is determined by the size of the discharge craters.

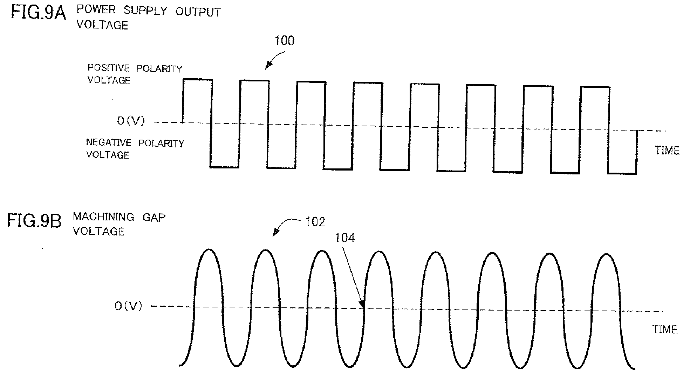

In wire electric discharge machining, which is a type of electric discharge machining, a known method of obtaining a fine machining surface is to apply an AC high frequency voltage across the machining gap between the workpiece and the wire electrode and repeat short-time discharge at a high frequency. FIG. 9B is an example of the AC high frequency voltage generated by the power supply for a wire electric discharge machine. A positive polarity voltage and a negative polarity voltage are output repeatedly as a power supply output voltage of 100 at a predetermined frequency from the power supply. The power supply output voltage is skewed by the inductance and stray capacitance that are present in a path to the machining gap as shown in FIG. 9B and a sine wave voltage 102 is applied across the machining gap. For example, Japanese Patent Application Laid-Open No. 61-260915 discloses a method of obtaining a machining surface with a surface roughness of 1μmRmax or less by machining with an AC high frequency voltage of 1 to 5 MHz.

However, it has become increasingly clear that machining with the AC high frequency voltage 102 (see FIG. 9B) causes problems (1) to (3) below in recent years.

(1) Reduction in straightness accuracy

If machining with an AC high frequency voltage is performed in wire electric discharge machining, the voltage is applied across the machining gap between the wire electrode and the workpiece at any time (see FIG. 9B). Accordingly, an electrostatic suction force is applied to the machining gap and the wire electrode is pulled toward the workpiece, as a result, a machining amount at the center of the thickness of the workpiece is increased so that the machining surface is contorted, thereby reducing straightness accuracy.

(2) Reduction in machining surface roughness

The voltage is reversed from positive to negative or from negative to positive in machining with an AC voltage, so a zero cross point 104 appears in a discharge wave form and an electric discharge is expected to interrupt every half cycle of the voltage (see FIG. 9B). If the frequency of the AC voltage is higher, however, extinction of each electric discharge arc becomes insufficient and, when, for example, an electric discharge occurs immediately after application of a voltage, an electric discharge is likely to occur repeatedly in the same position. Therefore, if an electric discharge continues to occur at a high frequency, the surface roughness is degraded as compared with that obtained in an AC half-wave discharge. Since the surface roughness is likely to depend on the frequency of an electric discharge, vertical lines may appear on the machining surface.

(3) Difficulty in determining the machining state

In wire electric discharge machining, the feedrate of the wire electrode and the machining settings are controlled by measuring the average voltage across the machining gap. For an AC high frequency voltage of several megahertz or more, a rectification circuit used to obtain an average voltage does not respond and measurement error becomes large. In high frequencies, resonance may easily occur between the machining power supply and the machining gap; if the electric discharge gap, workpiece thickness, or flow of dielectric fluid is changed, or if the electric coefficient across the machining gap changes slightly, then the machining voltage change significantly, thereby increasing difficulty in determining the machining state from the change of the average voltage. Accordingly, in finishing, the feedrate of the electrode is kept constant since feedback control based on the machining state is difficult, thereby blocking the improvement of machining accuracy.

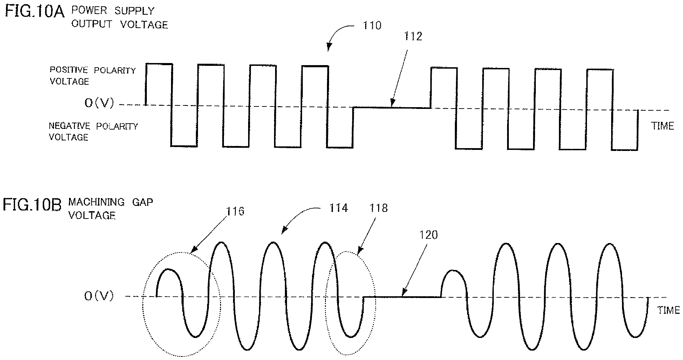

International Publication WO 2002-058874 discloses a method of intermittently applying an AC high frequency voltage to address the problems described in (1) and (2) above. However, to make this application method sufficiently effective, voltage application needs to be stopped at a significantly high frequency. In addition, there are periods where the voltage changes transiently when voltage application is started and stopped, so the correct machining voltage is applied only for a shorter period of time, thereby significantly reducing the machining efficiency. FIG. 10 illustrates this type of intermittent application of the AC high frequency voltage. FIG. 10B illustrates the waveform of an machining gap voltage. The part of 114 corresponds to a power supply output voltage 110, and the part of 120 corresponds to suspending time 112 in the power supply output. In sections 116 and 118 of the machining gap voltage 114, the machining gap voltage changes transiently. In a section 120, which corresponds to the suspending time 112, the machining gap voltage becomes 0. As shown in the non-application period 120 in FIG. 10B, an electric discharge is completely interrupted during this period.

As a measure against the problem described in (3), U.S. Patent Publication No. 7,038,158 discloses a technique for applying an AC high frequency wave on which a DC voltage was superimposed, extracting only the low frequency components of the machining gap voltage with a low-pass filter, and controlling the feed rate of the wire electrode based on the change in the low frequency voltage. The average voltage does not become 0 in this electrode feed technique, so electrochemical corrosion may occur in the workpiece or the electric discharge machine. In addition, because the low-pass filter is used, a response is delayed and tracking may be impossible when, for example, the discharge state changes rapidly.

EP 0 698 440 A1 discloses a power supply system for an electric discharge machine. US 5 585 014 discloses an apparatus for electrical discharge machining using variable capacitance and variable inductance. US 5 416 290 discloses an electrical discharge machine power supply circuit.

## SUMMARY OF THE INVENTION

An object of the present invention is, for solving the problems mentioned above, to provide a wire electric discharge machine which can obtain a high accuracy and high quality machined surface.

This object is attained by a wire electrical discharge machine having the features set out in independent claim 1.

Further embodiments are indicated in the dependent claims.

The wire electric discharge machine according to the present invention has a power supply for applying, across a machining gap between a wire electrode and a workpiece to be machined by the wire electric discharge machine, a positive polarity voltage and a negative polarity voltage alternately in a cycle of 1 microsecond or less, or applying a positive polarity voltage and a negative polarity voltage so that a ratio between those voltages applied per unit time equals to a predetermined value. The power supply has a voltage application means for applying the positive polarity voltage and the negative polarity voltage across the machining gap by inserting a non-application period that is equal to or longer than a voltage application period for each voltage application, and a vibration suppression means for suppressing a vibration that occurs in a transient state between the voltage application period and the non-application period. The vibration suppression means is a dumping resistor connected, in series to the machining gap, to the power supply and a resistance of the dumping resistor is set so that a resonant condition of the circuit including the power supply, a power cable for supplying an output from the power supply to the machining gap, and the machining gap comes near critical, and wherein the incorporation of the dumping resistor results in the waveform of the machining gap voltage being made trapezoidal.

The wire electric discharge machine may further comprise an electric discharge detector that determines, each time a voltage application starts, whether or not an electric discharge occurred by a last voltage application.

The wire electric discharge machine may further comprise a setting means for setting a ratio of the non-application period to the voltage application period depending on a desired machining accuracy, a desired surface roughness, a desired machining speed, a selected workpiece material, a selected workpiece thickness, or a selected wire diameter.

According to the present invention, the wire electric discharge machine with the above structure can provide a high accuracy and high quality machining surface.

## BRIEF DESCRIPTION OF THE DRAWINGS

The purposes and advantages of the present invention, including those described above, will be clarified by reference to the attached drawings in combination with the description of the embodiment presented below.

FIG. 1 is a circuit diagram schematically illustrating a first example of a bipolar voltage application circuit used as a power supply of a wire electric discharge machine.

FIGs. 2A and 2B       illustrate a first example of the waveform of a power supply output voltage obtained when two switching devices included in the bipolar voltage application circuit in FIG. 1 are turned on and off and the waveform of the corresponding machining gap voltage, respectively.

FIGs. 3A and 3B       illustrate the waveforms of a second example in which a trapezoidal-waveform voltage is applied across the machining gap.

FIG. 4A       illustrates the waveform of voltage changes when an electric discharge occurs in the case of the prior art where the machining gap voltage is an AC high frequency voltage.

FIG. 4B       illustrates the waveform of voltage changes when an electric discharge occurs in the case of the present invention where the machining gap voltage is a trapezoidal-waveform voltage.

FIG. 5       illustrates an example of an electric discharge detection circuit that detects whether an electric discharge is present or not.

FIG. 6A       illustrates a third example (trapezoidal-waveform voltage) of the waveform of a power supply output voltage obtained when the two switching devices included in the bipolar voltage application circuit in FIG. 1 are turned on and off.

FIG. 6B       illustrates a residual charge discharging command to be issued before a positive polarity voltage or a negative polarity voltage is applied.

FIG. 6C       illustrates the waveform of the corresponding machining gap voltage.

FIG. 7       is a circuit diagram schematically illustrating a third example of the bipolar voltage application circuit used as a power supply of the wire electric discharge machine.

FIG. 8       illustrates an example of the voltage application circuit having an electric discharge detection means and a residual charge discharging means.

FIGs. 9A and 9B       illustrate a waveform of a rectangular voltage generated by the power supply of the wire electric discharge machine and the waveform of the corresponding machining gap voltage, respectively.

FIGs. 10A and 10B       illustrate the waveform of an intermittent rectangular voltage generated by the power supply of the wire electric discharge machine and the waveform of the corresponding machining gap voltage, respectively.

DETAILED DESCRIPTION OF THE PREFERRED EMBODIMENTS

According to one embodiment of a wire electric discharge machine according to the present invention, when performing electric discharge machining, the waveform of machining gap voltage is made trapezoidal. Between applications of positive polarity voltage and negative polarity voltage, a non-application period that is equal to or longer than a voltage application period is inserted.

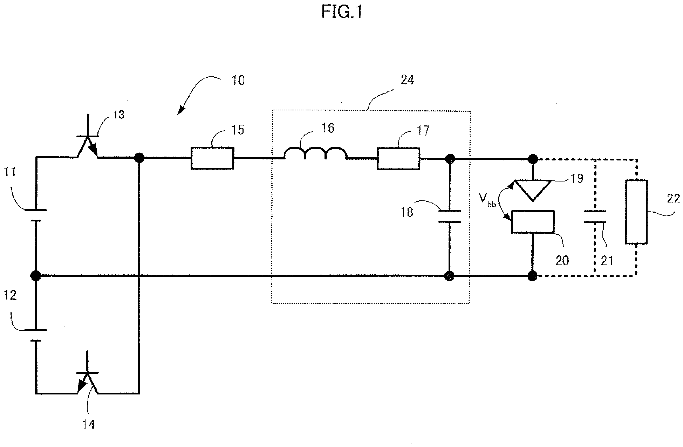

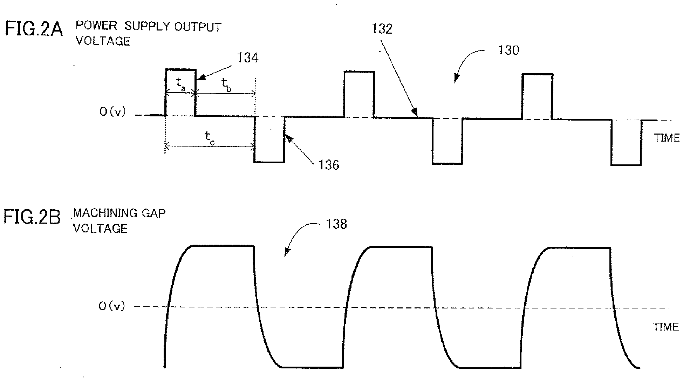

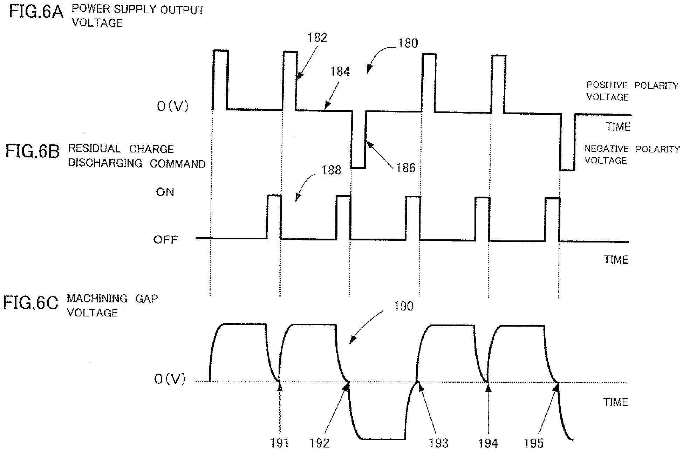

FIG. 1 is a circuit diagram schematically illustrating a bipolar voltage application circuit 10 used as a power supply of a wire electric discharge machine of this type. In FIG. 1, reference numerals 11 and 12 indicate direct-current power supplies, reference numerals 13 and 14 indicate switching devices, reference numeral 15 indicates a dumping resistor, reference numeral 16 indicates an inductance, reference numeral 17 indicates a resistance, reference numeral 18 indicates an line capacitance, reference numeral 19 indicates a wire electrode, reference numeral 20 indicates a workpiece, reference numeral 21 indicates a machining gap stray capacitance, and reference numeral 22 indicates a leak resistor. The inductance 16, resistance 17 and line capacitance 18 equivalently represent the inductance, resistance and capacitance of a wiring path between the power supply and the machining gap typified by a power cable 24, respectively. The machining gap voltage between the wire electrode 19 and the workpiece 20 is indicated by Vbb. The switching devices 13 and 14, which are turned on and off by a control circuit (not shown), output the power supply output voltages shown in FIGs. 2A and 6A.

The inductance 16, the resistance 17 and the line capacitance 18 of the power cable are present in the bipolar voltage application circuit 10; the machining gap stray capacitance 21 and the leak resistor 22 are present between the opposite surfaces of the wire electrode 19 and the workpiece 20 which form a machining gap. The circuit is configured so as to minimize the impedance of the whole circuit because machining current having a sharp edge and a high peak is suitable for rough and medium machining, so the inductance 16 and the resistance 17 are small and the line capacitance 18 is large. Accordingly, if the output energy from the power supply is reduced to improve surface roughness in the case of finish machining, high speed driving of the machining gap stray capacitance 21 including the line capacitance 18 becomes difficult, so the frequency of AC high frequency voltage is limited to at most 200 to 300 kHz.

Accordingly, in finish machining, a power cable with a smaller line capacitance 18 is used instead or the circuit is modified so as to minimize the machining gap stray capacitance 21, so that a high frequency voltage of 500 kHz or more can be applied.

The bipolar voltage application circuit 10 applies, across the machining gap, a power supply output voltage into which the non-application period (see tb in FIG. 2A) that follows applications of positive and negative polarity voltage (see ta in FIG. 2A), is inserted. First, electrical charge is accumulated as the line capacitance 18 and the machining gap stray capacitance 21 during voltage application (see ta in FIG. 2A), as a result, the machining gap voltage Vbb rises. After that, when the non-application period tb comes and no voltage is applied, the electrical charge accumulated as the line capacitance 18 and the machining gap stray capacitance 21 is leaked through the leak resistor 22, so the voltage gradually reduces. When the application interval is reduced to 1 microsecond or less, the non-application period tb becomes shorter than 1 microsecond, so a voltage drop during the non-application period tb is small enough to be negligible.

In addition, the bipolar voltage application circuit 10 has the dumping resistor 15 incorporated in series across the machining gap in order to make the waveform of machining gap voltage Vbb trapezoidal (see FIG. 2B), thereby preventing vibration from occurring in a transient state between applications and non-application of the power supply voltage. As the resistance of the dumping resistor 15 gets higher, the vibration suppression effect gets also higher, while voltage change speed gets lower, thereby skewing the waveform.

In the bipolar voltage application circuit 10 (see FIG. 1), which is the power supply of the wire electric discharge machine, if resistance R of the dumping resistor 15 is given as in the following equation so as to bring it into a critical condition, it is possible to obtain a fastest response while suppressing vibration,

$$R = 2\sqrt{(L/C)}$$

where L is circuit inductance 16 of the power cable 24 and C is the total capacitance of the line capacitance of the power cable 24 and the machining gap stray capacitance 21. However, if the workpiece thickness or the discharge gap changes during machining, the machining gap stray capacitance 21 also changes, so it is difficult to always satisfy the critical condition. If the changes are small, however, an effect on the machining characteristics is small and there are no practical problems even if the waveform of the machining gap voltage vibrates a little. The resistance R of the dumping resistor 15 is obtained by assigning, to the above expression, the inductance L and capacitance C of the circuit that were measured, but it is also possible to experimentally obtain the resistance R while checking the vibration and waveform skew.

FIGs. 2A and 2B show the power supply output voltage and the machining gap voltage obtained when DC voltage is switched on. In the power supply output voltage 130 in FIG. 2A, a positive polarity voltage 134 and a negative polarity voltage 136 appear alternately and each of these voltages is followed by a non-application period 132. Due to the power supply output voltage 130, the voltage (machining gap voltage) between the wire electrode and the workpiece becomes a trapezoidal-waveform voltage 138 shown in FIG. 2B. In FIG. 2A, a voltage application period ta, a non-application period tb, and a cycle tc are indicated. Here, 'one cycle' indicates the time from application of a positive polarity voltage to application of a negative polarity voltage in FIG. 2A, but, in FIG. 6A, 'one cycle' indicates the time from application of a positive polarity voltage to application of next positive polarity voltage. That is, 'one cycle' indicates the time from application of either a positive polarity voltage or negative polarity voltage to the next application of either a positive polarity voltage or negative polarity voltage.

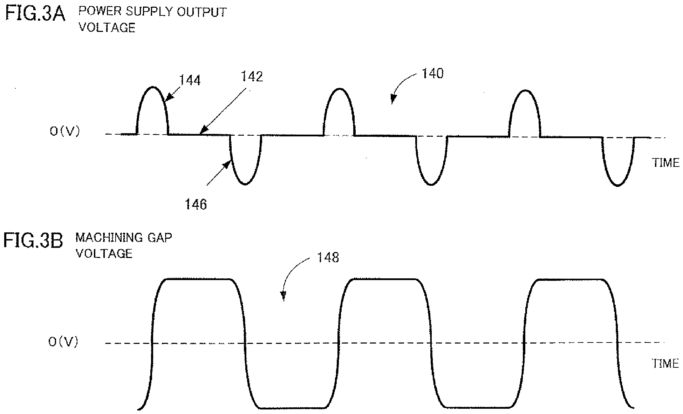

In FIG. 3A, AC high frequency power supplies are used instead of the DC power supplies 11 and 12 in FIG. 1, an AC high frequency voltage is switched in sync with its cycle, and the bipolar half-sign waves of a positive polarity voltage 144 and a negative polarity voltage 146 is output as power supply output voltage 140 with a non-application period 142 interposed between these half-sign waves. Due to this power supply output voltage 140, the voltage (machining gap voltage) between the wire electrode and the workpiece becomes a trapezoidal-waveform voltage 148 as shown in FIG. 3B.

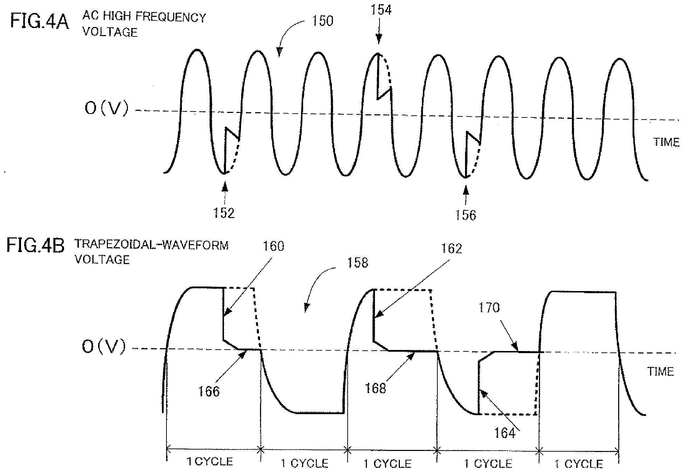

FIG. 4A illustrates a waveform in the case of prior art where machining gap voltage is an AC high frequency voltage 150. In FIG. 4A, reference numerals 152, 154 and 156 indicate electric discharge occurrence points, where the machining gap voltage drops. FIG. 4B illustrates a waveform in the case of the present invention in which the machining gap voltage is a trapezoidal-waveform voltage 158. In FIG. 4B, reference numerals 160, 162 and 164 indicate electric discharge occurrence points, where the machining gap voltage drops. When the machining gap voltage is the trapezoidal-waveform voltage 158 in FIG. 4B, a voltage drop for each electric discharge is larger than that in the case where the machining gap voltage is the AC high frequency voltage 150 in FIG. 4A; as the frequency of an electric discharge increases, the average machining gap voltage greatly decreases and the electrostatic suction on the wire electrode decreases rapidly, thereby improving the straightness accuracy.

In addition, as shown in FIG. 4B, non-application periods 166, 168 and 170 are inserted into each of inter-discharge sections of the trapezoidal-waveform voltage 158, so extinction of electric discharge arcs is made without fail, as a result, electric discharge positions are dispersed so that intensive electric discharges are unlikely to occur, thereby preventing the surface roughness of the workpiece machining surface from degrading. In addition, since the evenness of the electric discharge frequency is improved, local concentration of processing wastes is prevented, as a result, electric discharge machining becomes stable and a short circuit is unlikely to occur. As a result, machining with a trapezoidal-waveform voltage as in an embodiment of the present invention has the advantage of narrowing the electric discharge gap as compared with machining with the AC high frequency voltage as shown in FIGs. 4A and 9B, with the result that frequency of occurrence of electric discharge with respect to the number of voltage application increases, thereby suppressing reduction in the amount of machining even if non-application periods are inserted, as compared with intermittent application in FIG. 10.

TABLE 1 illustrates machining results when stable machining is maintained with a workpiece thickness of 100 mm, a wire diameter of 0.25 mm, and a machining speed of 4 mm/min. This table shows that the shortest electric discharge gap for maintaining stable machining for the trapezoidal machining gap voltage (see FIGs, 2B, 3B, 4B, and 6C) is 5 $\mu$m, which is smaller than 11 $\mu$m for the machining gap voltage of an AC high frequency wave or 7.5 $\mu$m for the machining gap voltage of an intermittent AC high frequency wave. This table also shows that, regarding the straightness accuracy and surface roughness, machining with a trapezoidal machining gap voltage is more desirable than machining with the machining gap voltage of the AC high frequency or intermittent AC high frequency.

<TABLE 1 >

| Machining gap voltage waveform | AC high frequency wave | Intermittent AC high frequency wave | Trapezoidal waveform |
|---|---|---|---|
| Frequency | 2.5 MHz | 2.5 MHz<br>Application: 10 $\mu$s<br>Non-application: 10 $\mu$s | 1 MHz<br>Application: 125 $\mu$s<br>Non-application: 375 $\mu$s |
| Straightness accuracy | 9 $\mu$m | 3 $\mu$m | 1 $\mu$m |
| Surface roughness | 3.5 $\mu$mRz | 3.5 $\mu$mRz | 2.5 $\mu$mRz |
| Machining amount | 12.8 $\mu$m | 7 $\mu$m | 7.5 $\mu$m |
| Discharge gap | 11 $\mu$m | 7.5 $\mu$m | 5 $\mu$m |

In addition, it is difficult to determine whether an electric discharge is present or not based on change in machining gap voltage, because the instantaneous value of machining gap voltage changes constantly in an ordinary AC high frequency wave voltage (see FIGs. 4A and 9B). Generally, an electric discharge occurs near the peak value of machining gap voltage and the machining gap voltage rapidly drops to approximately the arc voltage due to the electric discharge. At the electric discharge occurrence points 152, 154 and 156 as shown in FIG. 4A, machining gap voltage rapidly drops to the arc voltage due to electric discharge. Accordingly, if the rapid voltage drop is detected without fail, it is possible to determine whether an electric discharge has occurred or not. After the peak of machining gap voltage appears, however, machining gap voltage drops even if an electric discharge does not occur. As a result, if an electric discharge occurs a little late, a difference between voltage when electric discharge occurs and voltage when electric discharge does not occur becomes small. In addition, since machining gap voltage changes rapidly, a slight deviation of detection timing would cause error in determining the presence or absence of electric discharge. Therefore, it is almost impossible to detect electric discharge effectively in the case of AC high frequency voltage.

On the other hand, since in the present invention the waveform of the machining gap voltage is trapezoidal, if an electric discharge does not occur in a cycle, then the voltage is kept to approximately the peak value, whereas if an electric discharge occurs, then the voltage remains at a value equal to or less than the arc voltage because an output from the power supply is turned off.

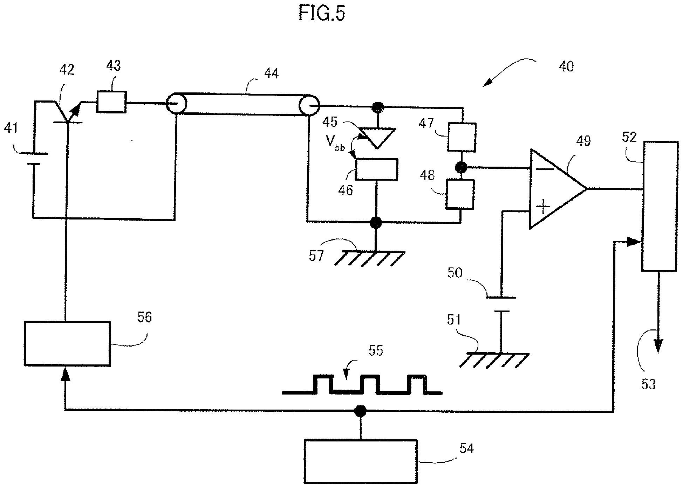

Accordingly, a voltage change due to the presence or absence of electric discharge can be clearly identified and management of slight determination timing would not be required. For example, it is possible to detect the presence or absence of electric discharge easily by comparing the machining gap voltage with the reference voltage, which is a judgment voltage, when voltage application in the next cycle starts. One example of electric discharge detector for detecting an electric discharge in this way is shown in FIG. 5. The electric discharge detector 40 shown in FIG. 5 assumes the detection of positive polarity voltage only, but the negative polarity voltage can also be detected similarly.

In FIG. 5, reference numeral 41 indicates a DC power supply, reference numeral 42 indicates a switching device, reference numeral 43 indicates a dumping resistor, reference numeral 44 indicates a power cable, reference numeral 45 indicates a wire electrode, reference numeral 46 indicates a workpiece, reference numerals 47 and 48 indicate voltage dividing resistors, reference numeral 49 indicates a comparator, reference numeral 50 indicates a judgment voltage, reference numeral 51 indicates grounding, reference numeral 52 indicates a latch circuit, reference numeral 53 indicates an electric discharge detection signal, reference numeral 54 indicates a positive polarity voltage application timing generator, reference numeral 55 indicates a timing signal, reference numeral 56 indicates a first driver circuit for driving the switching device 42, and reference numeral 57 indicates grounding.

In the electric discharge detector 40 in FIG. 5, the machining gap voltage Vbb is divided by a voltage divider including voltage dividing resistors 47 and 48 and the divided voltages are input to the comparator 49. The judgment voltage 50 for determining the presence or absence of electric discharge across the machining gap is also input to the comparator 49. An output signal from the comparator 49 is latched by the latch circuit 52 at the leading edge of the timing signal 55 output from the positive polarity voltage application timing generator 54 and the electric discharge detection signal 53 is output from the latch circuit 52.

If there is no electric discharge at the leading edge of the timing signal 55, the voltage input from the voltage divider (including voltage diving resistors 47 and 48) to the comparator 49 becomes higher than the judgment voltage 50, as a result, the comparator 49 outputs a low level signal (indicating absence of electric discharge). If there is an electric discharge across the machining gap, the voltage input from the voltage divider to the comparator 49 becomes lower than the judgment voltage 50 and the comparator 49 outputs a high level signal (indicating presence of electric discharge).

The latch circuit 52 latches, at the leading edge of the timing signal 55, a signal for indicating the presence or absence of an electric discharge which is output from the comparator 49 and outputs the signal as the electric discharge detection signal 53. The latch circuit 52 is reset by a reset signal (not shown) so that electric discharge can be detected for each cycle. Although the same timing signal 55 is input to the first driver circuit 56 and the latch circuit 52 in the circuit in FIG. 5, the first driver circuit 56 or the switching device 42 has a larger operation delay than the latch circuit 52 in an actual circuit. Therefore, the latch circuit 52 detects the presence or absence of electric discharge and then application of power supply output voltage is started.

According to the present invention, it is possible to detect the presence or absence of an electric discharge without fail, as a result, machining state can be judged and machining amount can be estimated accurately, thereby allowing more meticulous control than ever. The average voltage, which is used as a control indicator in general wire electric discharge machines, depends on the density of processing wastes in the machining gap or the conductivity (resistivity) of dielectric fluid. That is, the average voltage is likely to be affected by any disturbance other than the presence or absence of electric discharge. In addition, a low-pass filter is required in detection, thereby causing a delay in response. The present invention is unlikely to suffer such interference and capable of checking the machining status in real time, thereby reducing control delay.

In conventional machining with an AC high frequency voltage, since the voltage remains applied across the machining gap constantly, it is necessary to reverse the voltage polarities every half cycle and provide a zero cross point of electric current in order to mutually separate electric discharges. In machining with a trapezoidal-waveform voltage according to the present invention, since a non-application period is inserted for each voltage application to separate electric discharges, it is not necessary to reverse the voltage polarities and the continuous application of the same polarity would not degrade the surface roughness or surface quality (lines) of a surface to be machined. In addition, in the case of the present invention, as machining characteristics in electric discharge with positive polarity voltage is different from machining characteristics in electric discharge with negative polarity voltage, it is possible to change the machining characteristics deliberately by adjusting the ratio of the number of positive polarity voltage application to the number of negative polarity voltage application per unit time.

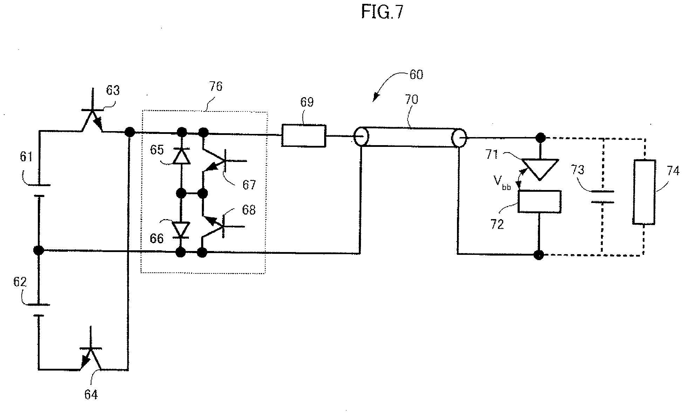

FIGs. 6A to 6C illustrate examples of outputting voltages by changing the ratio of the number of positive polarity voltage application to the number of negative polarity voltage application per unit time. FIG. 6A illustrates a power supply output waveform generated by repeatedly carrying out the procedure in which a positive polarity voltage is applied twice continuously and then a negative polarity voltage is applied once. FIG. 6B illustrates a residual charge discharging command to be issued before the application of a positive polarity voltage or a negative polarity voltage. FIG. 6C illustrates machining gap voltages that become approximately zero by the residual charge discharging command in FIG. 6B, as shown in reference numerals 191 to 195. An embodiment of the bipolar voltage application circuit that discharges residual charge by the residual charge discharging command will be described later with reference to FIG. 7.

In general, as an amount of machining by one electric discharge is larger in the case of electric discharge of negative polarity voltage than in the case of electric discharge of positive polarity voltage, increasing the number of negative polarity voltage application per unit time could improve machining speed. On the other hand, the depth of a discharge crater is shallower in the case of electric discharge of positive polarity voltage than in the case of electric discharge of negative polarity voltage, increasing the number of positive polarity voltage application per unit time could improve the surface roughness as shown in FIGs. 6A and 6C. In case where voltage of the same polarity is continuously applied, if the voltage is continuously applied with electric charge remaining in the machining gap stray capacitance, the machining gap voltage rises stepwise and the peak value of the voltage does not become constant.

Accordingly, it is necessary to provide a residual charge discharging means (see reference numeral 76 in FIG. 7) in parallel with the machining gap to discharge residual charge by operating the residual charge discharging means before voltage application. In addition, it is necessary to set the timing of discharge detection to the operation start time of the residual charge discharging means, not to the start time of voltage application.

FIG. 7 illustrates an example of a bipolar voltage application circuit comprising the residual charge discharging means mentioned above. The bipolar voltage application circuit 60 has DC power supplies 61 and 62, switching devices 63 and 64 to be turned on or off by a control means (not shown), a residual charge discharging switch 76, and a dumping resistor 69 and applies a bipolar voltage across the machining gap between a wire electrode 71 and a workpiece 72. Reference numeral 73 indicates a machining gap stray capacitance and reference numeral 74 indicates a leak resistor. The residual charge discharging switch 76, which includes diodes 65 and 66 and switching devices 67 and 68 in the present embodiment, constitutes the residual charge discharging means.

The operation of the residual charge discharging switch 76 (residual charge discharging means) will now be described with reference to the waveforms in FIGs. 6A to 6C. A residual charge discharging command 188 (in FIG. 6B) is output from a control circuit (not shown) to the residual charge discharging switch 76 in order to remove residual charge before the power supply output voltage of a negative polarity voltage 186 is applied across the machining gap. The switching devices 67 and 68 of the residual charge discharging switch 76 are turned on by the residual charge discharging command 188. This forms a closed circuit including the switching device 67 and the diode 66 or a closed circuit including the switching device 68 and the diode 65. Thus, the residual charge is consumed by a dumping resistor 69 even if either of the positive polarity voltage 182 or the negative polarity voltage 186 is applied in the machining gap. As described above, by providing the residual charge discharging switch 76, it becomes possible to substantially reset the machining gap voltage for each cycle to zero before the next cycle starts.

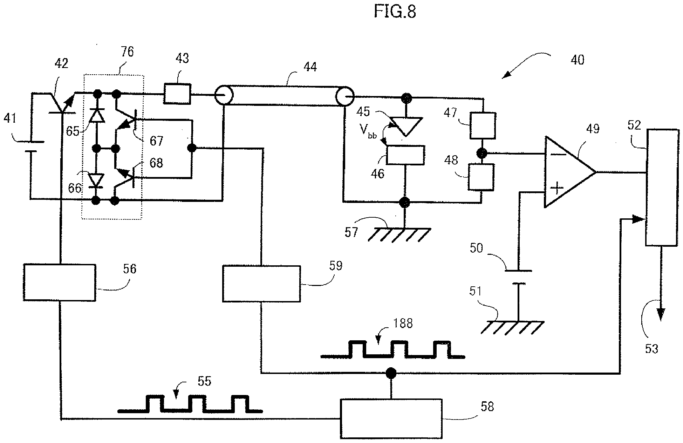

FIG. 8 illustrates an example of voltage application circuit having the discharge detection means described with reference to FIG. 5 and the residual charge discharging means described with reference to FIG. 7. In the residual charge discharging switch 76 in voltage application circuit in FIG. 8, the switching devices 67 and 68 are turned on or off via a second driver circuit 59 by the residual charge discharging command 188 (see FIG. 6B) output from the control circuit 58 as in the case of the residual charge discharging switch 76 in voltage application circuit in FIG. 7; when the residual charge discharging command 188 is turned on, the switching devices 67 and 68 are turned on. As a result, as in the case of the voltage application circuit in FIG. 7, a closed circuit including the switching device 67 and the diode 66 or a closed circuit including the switching device 68 and the diode 65 is formed, so the residual charge is consumed by a dumping resistor 43.

In the voltage application circuit in FIG. 8, the residual charge discharging command 188 is input to the latch circuit 52 in addition to the second driver circuit 59 to determine whether an electric discharge occurs or not. The presence or absence of an electric discharge can be determined by latching an output from the comparator 49 at the leading edge of the residual charge discharging command 188. The operation of the switching devices 67 and 68 are delayed as compared with the latch circuit 52 in the present embodiment, so the presence or absence of an electric discharge can be detected without problems by the latch circuit 52 based on the residual charge discharging command 188. On the other hand, the timing signal 55 is input from the control circuit 58 to the first driver circuit 56. The first driver circuit 56 turns on or off the switching device 42 based on the timing signal 55. The application of power voltage can be started after discharging residual charge with the timing signal 55 at the falling edge of the residual charge discharging command 188.

As described above, in the case of the present invention, although the trapezoidal machining voltage brings on many advantages, a non-application period is inserted for each voltage application and the ratio of non-application periods relatively increases, thereby reducing the machining speed. Accordingly, it is necessary to set the optimum non-application periods according to the machining purpose. The experiments performed so far proved that if the surface is rougher and the machining voltage were relatively high, the non-application period should be set to a larger value, whereas if the surface became finer, the non-application period should be set to a smaller value to increase the discharge frequency and suppress a reduction in the amount of machining.

The practical non-application period is approximately one to five times the voltage application period and a little too longer value would be advantageous in achievement of the machining stability, machining accuracy and surface quality (absence of surface lines), but disadvantageous in machining speed. The non-application period ten to twenty times the voltage application period still brings on advantages in improvement of the machining stability, machining accuracy and surface roughness, but the improvement peaks out and disadvantages such as reduction in speed become evident.

In addition, since the machining gap voltage gradually reduces in a non-application period, if the non-application period is too long, the machining gap voltage reduces to approximately the arc voltage, thereby making the detection of an electric discharge difficult. On the other hand, if the non-application period is shorter than the application period, the flat top of the voltage is shortened and the waveform changes to a sine wave with a distorted head instead of a trapezoid and the above-described advantage of a trapezoidal-waveform voltage is lost. Accordingly, the non-application period needs to be equal to or larger than the application period and, if the non-application period can be two or more times larger than the application period within the allowable range of machining speed, distinct effects are obtained.

## Claims

1. A wire electric discharge machine including a power supply for applying, across a machining gap between a wire electrode and a workpiece to be machined by the wire electric discharge machine, a positive polarity voltage and a negative polarity voltage alternately in a cycle of 1 microsecond or less, or applying a positive polarity voltage and a negative polarity voltage so that a ratio between those voltages applied per unit time equals to a predetermined value, **characterised in that** said power supply has:

   a voltage application means adapted to supply, across the machining gap, as a power supply output voltage the positive polarity voltage and the negative polarity voltage by inserting a non-application period that is equal to or longer than a voltage application period for each voltage application; and
   a vibration suppression means for suppressing a vibration that occurs in a transient state between the voltage application period and the non-application period, wherein said vibration suppression means includes a dumping resistor connected, in series to the machining gap, to the power supply and a resistance of the dumping resistor is set so that a resonant condition of the circuit including the power supply, a power cable for supplying an output from the power supply to the machining gap, and the machining gap comes near critical, and wherein the incorporation of the dumping resistor results in the waveform of the machining gap voltage to be made trapezoidal.

2. The wire electric discharge machine according to claim 1, further comprising an electric discharge detector that determines, each time a voltage application start moments, whether or not an electric discharge occurred by a last voltage application.

3. The wire electric discharge machine according to claim 1 or 2 further comprising a setting means for setting a ratio of the non-application period to the voltage application period depending on a desired machining accuracy, a desired surface roughness, a desired machining speed, a selected workpiece material, a selected workpiece thickness, or a selected wire diameter.

## Patentansprüche

1. Drahtfunkenerosionsmaschine, die eine Stromversorgung zum Beaufschlagen mit einer Spannung positiver Polarität und einer Spannung negativer Polarität abwechselnd in einem Zyklus von 1 Mikrosekunde oder weniger über einen Bearbeitungsspalt zwischen einer Drahtelektrode und einem von der Drahtfunkenerosionsmaschine zu bearbeitenden Werkstück, oder zum Beaufschlagen mit einer Spannung positiver Polarität und einer Spannung negativer Polarität beinhaltet, sodass ein Verhältnis zwischen diesen beaufschlagten Spannungen pro Zeiteinheit einem vorbestimmten Wert entspricht, **dadurch gekennzeichnet, dass** die Stromversorgung aufweist:

   ein Spannungsbeaufschlagungsmittel, das geeignet ist, um über den Bearbeitungsspalt die Spannung positiver Polarität und die Spannung negativer Polarität durch Einfügen einer Nichtbeaufschlagungsdauer, die gleich oder länger als eine Spannungsbeaufschlagungsdauer für jedes Beaufschlagen mit einer Spannung als Stromversorgungs-Ausgangsspannung zuzuführen; und
   ein Schwingungsunterdrückungsmittel zum Unterdrücken einer Schwingung, die in einem Übergangszustand zwischen der Spannungsbeaufschlagungsdauer und der Nichtbeaufschlagungsdauer auftritt, wobei das Schwingungsunterdrückungsmittel einen Dumping-Widerstand beinhaltet, der in Reihe mit dem Bearbeitungsspalt an die Stromversorgung angeschlossen ist und ein Widerstand des Dumping-Widerstands eingestellt ist, sodass ein Resonanzzustand der Schaltung, die die Stromversorgung, ein Stromkabel zum Zuführen eines Ausgangs der Stromversorgung zu dem Bearbeitungsspalt und den Bearbeitungsspalt beinhaltet, fast-kritisch wird, und wobei die Einbeziehung der Ergebnisse des Dumping-Widerstands dazu führt, dass die Wellenform der Spannung des Bearbeitungsspalts trapezförmig wird.

2. Drahtfunkenerosionsmaschine nach Anspruch 1, ferner umfassend einen Funkenerosionsdetektor, der jedes Mal, wenn eine Spannungsbeaufschlagung startet, ermittelt, ob eine Funkenerosion durch eine letzte Spannungsbeaufschlagung erfolgt ist oder nicht.

3. Drahtfunkenerosionsmaschine nach Anspruch 1 oder 2, ferner umfassend ein Einstellmittel zum Einstellen eines Verhältnisses der Nichtbeaufschlagungsdauer zu der Spannungsbeaufschlagungsdauer in Abhängigkeit von einer gewünschten Bearbeitungsgenauigkeit, einer gewünschten Oberflächenrauigkeit, einer gewünschten Bearbeitungsgeschwindigkeit, einem ausgewählten Material des Werkstücks, einer ausgewählten Dicke des Werkstücks oder einem ausgewählten Drahtdurchmesser.

## Revendications

1. Machine à décharge électrique à fil comprenant une alimentation électrique pour appliquer, sur un intervalle d'usinage entre un fil-électrode et une pièce à usiner par la machine à décharge électrique à fil, une tension à polarité positive et une tension à polarité négative en alternance dans un cycle de 1 microseconde ou moins, ou appliquer une tension à polarité positive et une tension à polarité négative de telle sorte qu'un rapport entre ces tensions appliquées par unité de temps est égal à une valeur prédéterminée, **caractérisée par le fait que** ladite alimentation électrique a :

un moyen d'application de tension adapté pour fournir, sur l'intervalle d'usinage, en tant que tension de sortie d'alimentation électrique, la tension à polarité positive et la tension à polarité négative en insérant une période de non-application qui est égale ou plus longue qu'une période d'application de tension pour chaque application de tension ; et
un moyen de suppression de vibration pour supprimer une vibration qui se produit dans un état transitoire entre la période d'application de tension et la période de non-application, ledit moyen de suppression de vibration comprenant une résistance d'amortissement reliée, en série avec l'intervalle d'usinage, à l'alimentation électrique et une résistance de la résistance d'amortissement étant définie de telle sorte qu'une condition de résonance du circuit comprenant l'alimentation électrique, un câble d'alimentation pour fournir une sortie de l'alimentation électrique à l'intervalle d'usinage, et l'intervalle d'usinage, devient presque critique, et l'incorporation de la résistance d'amortissement résultant en ce que la forme d'onde de la tension d'intervalle d'usinage soit trapézoïdale.

2. Machine à décharge électrique à fil selon la revendication 1, comprenant en outre un détecteur de décharge électrique qui détermine, à chaque instant de début d'application de tension, si une décharge électrique s'est produite ou non par une dernière application de tension.

3. Machine à décharge électrique à fil selon la revendication 1 ou 2, comprenant en outre un moyen de réglage pour régler un rapport de la période de non-application à la période d'application de tension en fonction d'une précision d'usinage souhaitée, d'une rugosité de surface souhaitée, d'une vitesse d'usinage souhaitée, d'un matériau de pièce sélectionné, d'une épaisseur de pièce sélectionnée ou d'un diamètre de fil sélectionné.

FIG.1

FIG.2A POWER SUPPLY OUTPUT
VOLTAGE

132

130

134

$t_a$ $t_b$

0(v)

$t_c$

136

TIME

FIG.2B MACHINING GAP
VOLTAGE

138

0(v)

TIME

FIG.3A POWER SUPPLY OUTPUT
VOLTAGE

FIG.3B MACHINING GAP
VOLTAGE

FIG.4A  AC HIGH FREQUENCY VOLTAGE

O (V)

TIME

150

154

152

156

FIG.4B  TRAPEZOIDAL-WAVEFORM VOLTAGE

O (V)

TIME

160

162

158

170

166

168

164

1 CYCLE  1 CYCLE  1 CYCLE  1 CYCLE  1 CYCLE

14

FIG.5

FIG.6A POWER SUPPLY OUTPUT
VOLTAGE

POSITIVE POLARITY
VOLTAGE

O(V)

TIME

FIG.6B RESIDUAL CHARGE
DISCHARGING COMMAND

NEGATIVE POLARITY
VOLTAGE

ON

OFF

TIME

FIG.6C MACHINING GAP
VOLTAGE

O(V)

TIME

FIG.7

FIG.8

FIG.9A POWER SUPPLY OUTPUT
VOLTAGE

100

POSITIVE POLARITY
VOLTAGE

0(V)

NEGATIVE POLARITY
VOLTAGE

TIME

FIG.9B MACHINING GAP
VOLTAGE

102
104

0(V)

TIME

FIG.10A POWER SUPPLY
OUTPUT VOLTAGE

POSITIVE POLARITY
VOLTAGE

O(V)

NEGATIVE POLARITY
VOLTAGE

110

112

TIME

FIG.10B MACHINING GAP
VOLTAGE

116        114   118

120

O(V)

TIME

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0698440 A1
- JP 61260915 A
- WO 2002058874 A
- US 7038158 B
- US 5585014 A
- US 5416290 A